# EUROPÄISCHE PATENTANMELDUNG

(11) **EP 2 517 937 A2**
(43) Veröffentlichungstag der Anmeldung: **31.10.2012**
(21) Anmeldenummer: 12158337.1
(22) Anmeldetag: 07.03.2012
(51) Int. Cl.: B60T 17/04, F16L 9/147

(54) **Schienenfahrzeug mit einer Arbeitsmedienversorgung**

(30) Priorität: 26.04.2011 DE 202011005587 U
(71) Anmelder: Bombardier Transportation GmbH, 10785 Berlin (DE)
(72) Erfinder: Carpentier, Christian, 6238 Luttre (BE); Brunet, Julien, 59350 Saint André lez Lille (FR); Allert, Frederik, 7863 Ghoy (BE)
(74) Vertreter: Cohausz & Florack

(57) **Zusammenfassung**

Die Erfindung betrifft ein Schienenfahrzeug mit einer Arbeitsmedienversorgung, die mindestens eine durch ein Arbeitsmedium betriebene Einrichtung (1) und eine damit verbundene Verrohrung (2) aufweist, wobei die Verrohrung (2) mindestens ein halbflexibles, Kunststoff enthaltendes Rohr (2.1) sowie Rohrverbindungsmittel (2.2) und Rohrbefestigungsmittel (2.3) aufweist. Zur Verbesserung der Handhabbarkeit einer Druckluftverrohrung im Außenbereich schlägt die Erfindung vor, dass das mindestens eine halbflexible Rohr (2.1) ein mindestens zweischichtiges Verbundrohr (2.1) ist.

## Beschreibung

Die Erfindung betrifft ein Schienenfahrzeug mit einer Arbeitsmedienversorgung, die mindestens eine durch ein Arbeitsmedium betriebene Einrichtung und eine damit verbundene Verrohrung aufweist, wobei die Verrohrung mindestens ein halbflexibles, Kunststoff enthaltendes Rohr sowie Rohrverbindungsmittel und Rohrbefestigungsmittel aufweist.

Im Außenbereich von Schienenfahrzeugen ist am Fahrwerk eine Druckluftversorgung zu entsprechenden Verbrauchern vorgesehen. Die Druckluftversorgung verfügt über eine Druckluftverrohrung, die jahrzehntelang durch Stahlrohre realisiert wurde. Verbindungen mehrerer solcher Stahlrohre wurden mit Hilfe von Schneidringverschraubungen hergestellt. Bei der Herstellung und dem Einbau einer solchen Druckluftverrohrung wurden die Stahlrohre zuerst zugeschnitten und entgratet, anschließend in Vormontage maschinell gebogen, gereinigt und an ihren Öffnungen verschlossen, um das Eindringen von Verunreinigungen zu vermeiden. Danach wurden die Stahlrohre in Hilfsgestellen zum Einbauort transportiert. Infolge der Größe und des Gewichtes der Stahlrohre erforderte die Bereitstellung der Stahlrohre einen hohen Platzbedarf und logistischen Aufwand.

Die beschriebenen Stahlrohre wurden auch im Innenbereich von Schienenfahrzeugen für die Versorgung von pneumatischen Türantrieben verwendet, wie dies beispielsweise in der DE 200 15 593 U1 beschrieben ist. Die ungünstige Handhabbarkeit der Stahlrohre, die sich auf den Transport und den Einbau nachteilig auswirkte, wurde zum Anlass genommen, die Druckluftverrohrung weiterzuentwickeln. So ist es aus der EP 1 223 376 B1 bekannt, für die Verrohrung halbflexible, Kunststoff enthaltende Rohre zu verwenden. Halbflexibel bedeutet im Sinne der Erfindung, dass die Rohre zum einen derart elastisch sind, dass sie von einer Kraft, die ein Mensch ohne größere zusätzliche Hilfsmittel aufwenden kann, biegsam sind und zum anderen, dass die Rohre eine derartige Steifigkeit aufweisen, dass sie sich nicht unter ihrem Eigengewicht im eingebauten Zustand wesentlich verformen können, das heißt so weit verformen können, dass ihre Funktion eingeschränkt wird. Für die Verrohrung im Innenbereich werden als halbflexible Rohre Polyamidrohre und/oder Polyurethanrohre beschrieben.

Die beschriebenen halbflexiblen Rohre werden bisher nur im Innenbereich eingesetzt, da die Rohre hier vergleichsweise geschützt sind. Bei einem Einsatz im Außenbereich, insbesondere am Schienenfahrzeugfahrwerk, wäre das Risiko zu groß, dass diese Rohre aufgrund ihrer Elastizität insbesondere durch Steinschlag, Regenwasser/Schnee, Reinigungsflüssigkeit und den Fahrtwind beschädigt werden. Insbesondere im Bereich der Rohre, in dem diese über Rohrbefestigungsmittel mit der Fahrzeugstruktur verbunden sind, besteht eine erhöhte Abknickgefahr.

Es ist daher die Aufgabe der vorliegenden Erfindung, ein Schienenfahrzeug anzugeben, welches eine verbesserte Handhabbarkeit einer Druckluftverrohrung im Außenbereich gewährleistet.

Die zuvor hergeleitete und aufgezeigte Aufgabe wird gelöst durch ein Schienenfahrzeug mit einer Arbeitsmedienversorgung, die mindestens eine durch ein Arbeitsmedium, insbesondere Luft, betriebene Einrichtung und eine damit verbundene Verrohrung aufweist, wobei die Verrohrung mindestens ein halbflexibles, Kunststoff enthaltendes Rohr sowie Rohrverbindungsmittel zum Verbinden von mindestens zwei Rohren miteinander und Rohrbefestigungsmittel zum Befestigen der Rohre an einer tragenden Struktur aufweist, wobei das mindestens eine halbflexible Rohr ein mindestens zweischichtiges, vorzugsweise genau zweischichtiges, Verbundrohr ist.

Mit einem Verbundrohr ist ein Rohr gemeint, welches mindestens zwei separate Schichten (Lagen) aufweist, die radial übereinander angeordnet sind und aus unterschiedlichen Materialien bestehen. Dabei kann das Verbundrohr eine Metallschicht, insbesondere Aluminiumschicht oder Schicht aus rostfreiem Stahl, aufweisen. Als Kunststoffschicht kann das Verbundrohr eine Schicht aus Polyethylen, insbesondere PE-HD (PE-HD: definiert als hochdichtes Polyethylen mit einer Dichte von 0,94 bis 0,97 g/cm³) aufweisen.

Die Metallschicht bildet bevorzugt eine innenliegende Lage, insbesondere die innere, das heißt die am weitesten innenliegende Lage, des Verbundrohrs. Die Kunststoffschicht bildet bei dem Verbundrohr bevorzugt die äußere, das heißt die am weitesten außenliegende Lage.

Eine Verrohrung der zuvor definierten Art hat den Vorteil, dass das Verbundrohr durch den mindestens zweischichtigen Aufbau besonders stabil ist und nicht ohne weiteres Abknicken kann. Gerade Metall führt zu einer erhöhten Stabilität, durch die das halbflexible Rohr problemlos im Außenbereich den harten Umgebungsbedingungen wie zum Beispiel Steinschlag, Regenwasser/Schnee, Reinigungsflüssigkeit und dem Fahrtwind ausgesetzt werden kann, ohne dass es sich wesentlich verformt. Eine Kunststoffschicht hat den Vorteil, dass dadurch die Metallschicht vor Umgebungseinflüssen geschützt wird. Eine Kunststoffummantelung ist ein idealer Korrosionsschutz, so dass das Rohr keinen separaten Schutzanstrich benötigt.

Die Metallschicht hat auch den Vorteil, dass das Rohr nach dem Verformen seine neue Form besser beibehält. Auch wird die Befestigung vereinfacht, da sich die Rohrbefestigungsmittel im montierten Zustand in die äußere Kunststoffschicht eingraben können, was zu einer besonders guten axialen Fixierung führt, wobei aber die innere Metallschicht dem Druck des Befestigungsmittels entgegenwirkt und verhindert, dass sich der Innenquerschnitt im Bereich der Rohrbefestigungsmittel nennenswert reduziert.

Es hat sich herausgestellt, dass die zuvor beschriebene und im Folgenden noch näher spezifizierte Verrohrung überraschend bei Schienenfahrzeugen, und zwar speziell im Außenbereich, eingesetzt werden kann. So bestehen bei Schienenfahrzeugen im Gegensatz zu anderen Fahrzeugen, insbesondere im Gegensatz zum Automobilbau, deutlich höhere Anforderungen an die Lebensdauer und Temperaturbeständigkeit von Leitungen zur Arbeitsmedienversorgung. Beispielsweise wird von den Betreibern von Schienenfahrzeugen verlangt, dass die Verrohrung eine Haltbarkeit von 20 Jahren oder mehr hat, ohne dass Teile der Leitung, insbesondere Rohre, ausgewechselt werden müssen. Der Temperaturbereich für den Einsatz der Verrohrung, was gerade bei einem Einsatz im Außenbereich zu beachten ist, reicht bis zu -25°C oder sogar noch tiefer. Bei Schienenfahrzeugen sind daher bisher im Außenbereich weiterhin Rohre aus Metall, insbesondere die eingangs beschriebenen Stahlrohre, zur Arbeitsmedienversorgung eingesetzt worden.

Die erfindungsgemäß eingesetzten Verbundrohre erlauben aufgrund der elastischen Verformbarkeit der Rohre bei der Endmontage der Verrohrung im Außenbereich eine Reduzierung des Aufwands. Zum Beispiel ist es möglich, luftbetriebene Einrichtungen, die mit dem erfindungsgemäß verwendeten Verbundrohr verbunden werden, je nach Montagesituation an der tragenden Struktur des Schienenfahrzeugs zu befestigen und dabei den günstigsten Befestigungspunkt erst im Augenblick der Montage auszuwählen, ohne die Notwendigkeit einer aufwendigen und planungsintensiven Vorbereitung der Befestigungen und der Leitungsverläufe. Der Verlauf der Rohre kann ohne weiteres während der Endmontage individuell festgelegt und angepasst werden. Dies war bisher bei den im Außenbereich vorgesehenen Stahlrohren nicht möglich, da diese in Vormontage gebogen und dann zum Einbauort transportiert werden mussten.

Gemäß einer Ausgestaltung weist das Verbundrohr im nicht-montierten Zustand einen Außendurchmesser in einem Bereich von 6 bis 30 mm auf. Weiterhin ist es denkbar, dass das Verbundrohr im nicht-montierten Zustand eine Wandstärke in einem Bereich von 1 bis 2 mm aufweist. Solche Rohrabmessungen haben sich als besonders geeignet für die Verwendung und Handhabung im Außenbereich eines Schienenfahrzeugs erwiesen. Wie bereits erwähnt, kann dabei vorgesehen sein, dass das Verbundrohr durch ein Rohrbefestigungsmittel an einer tragenden Struktur befestigt ist, wobei im montierten Zustand der Aufnahmequerschnitt des Rohrbefestigungsmittels kleiner ist als der Außenquerschnitt des Verbundrohres im nicht-montierten Zustand.

Gemäß einer weiteren Ausgestaltung ist die Verrohrung im Außenbereich des Schienenfahrzeugs befestigt. Grundsätzlich ist die Verrohrung aber auch für die Verwendung im Innenbereich eines Schienenfahrzeugs geeignet, beispielsweise für eine Druckluftversorgung von pneumatischen Türantrieben. Als besonders geeignet hat sich aber die erfindungsgemäß eingesetzte Verrohrung zum Zwecke der Befestigung am Fahrwerk des Schienenfahrzeugs erwiesen. Eine entsprechende durch das Arbeitsmedium - beispielsweise Luft, wobei aber auch andere Arbeitsmedien denkbar sind - betriebene Einrichtung kann Teil des Fahrwerks, insbesondere Teil der Bremsanlage oder des Federungssystems, sein.

Als Rohrverbindungsmittel ist gemäß einer Ausgestaltung ein Steckverbinder zum Ein- oder Aufstecken vorgesehen, der das Verbundrohr mit einem weiteren Rohr verbindet. Das weitere Rohr kann ebenfalls ein Verbundrohr der zuvor definierten Art sein, kann aber auch ein herkömmliches Rohr, beispielsweise Stahlrohr, sein. Die Verbindung mehrerer Rohre, von denen zumindest eines ein wie zuvor beschriebenes Verbundrohr ist, erfolgt beispielsweise mittels Metrulok-Steckverbindern und/oder Prestolok-Steckverbindern. Auch eine Schneidringverschraubung ist als Rohrverbindungsmittel denkbar.

Gemäß noch einer Ausgestaltung ist als Rohrbefestigungsmittel eine Rohrschelle, insbesondere eine Standard-Rohrschelle, eine Rohrklemme, insbesondere rastbare Rohrklemme, beispielsweise auch eine Mehrfach-Rohrklemme, und/oder ein Kabelbinder vorgesehen, der das Verbundrohr mit einem tragenden Teil des Schienenfahrzeugs, insbesondere des Fahrwerks, verbindet.

Es gibt nun eine Vielzahl von Möglichkeiten, das erfindungsgemäße Schienenfahrzeug auszugestalten und weiterzubilden. Hierzu sei einerseits verwiesen auf die dem Patentanspruch 1 nachgeordneten Patentansprüche, andererseits auf die Beschreibung eines Ausführungsbeispiels in Verbindung mit der Zeichnung. In der Zeichnung zeigt:
- Fig. 1: ein Ausführungsbeispiel mit einer Verrohrung im Außenbereich eines Schienenfahrzeugs und
- Fig. 2: eine Schnittansicht eines Verbundrohres für eine Anwendung gemäß Fig. 1.

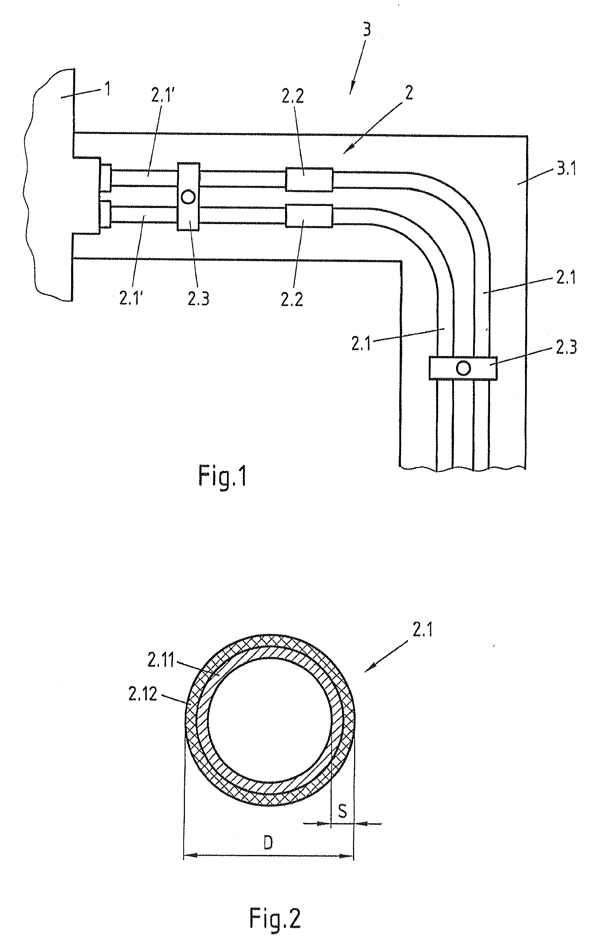

Fig. 1 zeigt als Bestandteil eines Schienenfahrzeugs einen Teil eines Fahrwerks 3 mit einer wie folgt ausgebildeten Arbeitsmedienversorgung.

Am Fahrwerk 3 ist eine durch ein Arbeitsmedium, hier Luft, betriebene Einrichtung 1 und eine damit verbundene Verrohrung 2 installiert, wobei die Verrohrung 2 mehrere paarweise angeordnete, halbflexible, zweischichtige Verbundrohre 2.1 bzw. 2.1', mehrere Rohrverbindungsmittel 2.2 und mehrere Rohrbefestigungsmittel 2.3 aufweist.

Bei den Rohren 2.1 und 2.1' handelt es sich jeweils um ein Verbundrohr mit einem Aufbau, wie er in Fig. 2 im Querschnitt gezeigt ist. Das in Fig. 2 dargestellte Verbundrohr 2.1 weist als innere Lage eine Aluminiumschicht 2.11 auf, die von einer äußeren Lage aus einer Kunststoffschicht 2.12 ummantelt ist. Bei der Kunststoffschicht 2.12 handelt es sich um PE-HD einer Dichte von hier beispielhaft 0,95 g/cm³.

Der Außendurchmesser D des Verbundrohres 2.1 beträgt im in Fig. 2 dargestellten nicht-montierten Zustand beispielhaft 12 mm, wobei der Außendurchmesser D im montierten Zustand kleiner sein kann. Die Wandstärke s beträgt beispielhaft 1,5 mm im nicht-montierten Zustand und kann im montierten Zustand ebenfalls kleiner sein.

Wie Fig. 1 zeigt, verläuft die Verrohrung 2 im Außenbereich am Fahrwerk 3, und zwar an einem tragenden Teil 3.1, wobei die beiden Verbundrohre 2.1 eine Richtungsänderung von 90° durchlaufen. Die halbflexiblen Eigenschaften der Rohre erlauben es, die Rohre am Ort der Endmontage nach der vorangehenden Befestigung der luftbetriebenen Einrichtung 1 in ihrem Verlauf individuell anzupassen. Aufgrund der durch die Metallschicht 2.11 erhöhten Stabilität der Verbundrohre 2.1 können die Rohrbefestigungsmittel 2.3 auch in einem relativ großen Abstand voneinander vorgesehen werden, ohne dass das Risiko besteht, dass sich im Betrieb des Schienenfahrzeugs durch äußere Einflüsse wie Fahrtwind, Regen etc. eines der Verbundrohre 2.1 aus der in Fig. 1 gezeigten Lage bewegt bzw. verformt.

Als Rohrverbindungsmittel 2.2 ist hier jeweils ein Steckverbinder 2.2 vorgesehen. Die Befestigung der Verbundrohre 2.1 und 2.1' am tragenden Teil 3.1 des Fahrwerks erfolgt durch Mehrfach-Rohrklemmen 2.3, die es erlauben, gleichzeitig mehrere Rohre, hier ein Rohrpaar, aufzunehmen.

## Patentansprüche

1. Schienenfahrzeug mit einer Arbeitsmedienversorgung, die mindestens eine durch ein Arbeitsmedium betriebene Einrichtung (1) und eine damit verbundene Verrohrung (2) aufweist, wobei die Verrohrung (2) mindestens ein halbflexibles, Kunststoff enthaltendes Rohr (2.1) sowie Rohrverbindungsmittel (2.2) und Rohrbefestigungsmittel (2.3) aufweist, **dadurch gekennzeichnet, dass** das mindestens eine halbflexible Rohr (2.1) ein mindestens zweischichtiges Verbundrohr (2.1) ist.

2. Schienenfahrzeug nach Anspruch 1, **dadurch gekennzeichnet, dass** das Verbundrohr (2.1) eine Metallschicht (2.11), insbesondere Aluminiumschicht (2.11) oder Schicht (2.11) aus rostfreiem Stahl, aufweist.

3. Schienenfahrzeug nach Anspruch 2, **dadurch gekennzeichnet, dass** die Metallschicht (2.11) eine innenliegende Lage, insbesondere die innere Lage, des Verbundrohres (2.1) bildet.

4. Schienenfahrzeug nach einem der vorangehenden Ansprüche, **dadurch gekennzeichnet, dass** das Verbundrohr (2.1) als eine Kunststoffschicht (2.12) eine Schicht (2.12) aus Polyethylen, insbesondere aus PE-HD, aufweist.

5. Schienenfahrzeug nach einem der vorangehenden Ansprüche, **dadurch gekennzeichnet, dass** das Verbundrohr (2.1) eine Kunststoffschicht (2.12) als äußere Lage aufweist.

6. Schienenfahrzeug nach einem der vorangehenden Ansprüche, **dadurch gekennzeichnet, dass** das Verbundrohr (2.1) im nicht-montierten Zustand einen Außendurchmesser (D) in einem Bereich von 6 bis 30 mm aufweist.

7. Schienenfahrzeug nach einem der vorangehenden Ansprüche, **dadurch gekennzeichnet, dass** das Verbundrohr (2.1) im nicht-montierten Zustand eine Wandstärke (s) in einem Bereich von 1 bis 2 mm aufweist.

8. Schienenfahrzeug nach einem der vorangehenden Ansprüche, **dadurch gekennzeichnet, dass** die Verrohrung (2) im Außenbereich des Schienenfahrzeugs befestigt ist.

9. Schienenfahrzeug nach einem der vorangehenden Ansprüche, **dadurch gekennzeichnet, dass** die Verrohrung (2) am Fahrwerk (3) des Schienenfahrzeugs befestigt ist.

10. Schienenfahrzeug nach einem der vorangehenden Ansprüche, **dadurch gekennzeichnet, dass** das Arbeitsmedium, welches das Verbundrohr (2.1) durchströmt, Luft ist.

11. Schienenfahrzeug nach einem der vorangehenden Ansprüche, **dadurch gekennzeichnet, dass** die durch das Arbeitsmedium betriebene Einrichtung (1) Teil des Fahrwerks (3), insbesondere Teil der Bremsanlage oder des Federungssystems, ist.

12. Schienenfahrzeug nach einem der vorangehenden Ansprüche, **dadurch gekennzeichnet, dass** als Rohrverbindungsmittel (2.2) ein Steckverbinder zum Ein- oder Aufstecken vorgesehen ist, der das Verbundrohr (2.1) mit einem weiteren Rohr (2.1') verbindet.

13. Schienenfahrzeug nach einem der vorangehenden Ansprüche, **dadurch gekennzeichnet, dass** als Rohrbefestigungsmittel (2.3) eine Rohrschelle, eine Rohrklemme, insbesondere rastbare Rohrklemme, und/oder ein Kabelbinder vorgesehen ist, der das Verbundrohr (2.1) mit einem tragenden Teil (3.1) des Schienenfahrzeugs, insbesondere des Fahrwerks (3), verbindet.
